# EUROPEAN PATENT SPECIFICATION

(11) **EP 3 693 695 B1**
(45) Date of publication and mention of the grant of the patent: **21.04.2021**
(21) Application number: 19155893.1
(22) Date of filing: 07.02.2019
(51) Int. Cl.: G01B 11/00, G01B 11/24, G01N 21/954, G01B 11/02, G01B 11/04, G01B 11/10, G01B 11/12

(54) **SYSTEM AND METHOD FOR INSPECTION OF A CYLINDER LINER**
SYSTEM UND VERFAHREN ZUR INSPEKTION EINER ZYLINDERLAUFBÜCHSE
SYSTÈME ET PROCÉDÉ D'INSPECTION D'UNE CHEMISE DE CYLINDRE

(43) Date of publication of application: 12.08.2020
(73) Proprietor: Hinnerskov, Gustav, 2100 Copenhagen (DK)
(72) Inventor: Hinnerskov, Gustav, 2100 Copenhagen (DK)
(74) Representative: Holme Patent A/S

(56) References cited:
- EP-A1- 2 447 664
- WO-A1-2009/152851
- GB-A- 2 068 114
- JP-A- H08 178 907
- US-A- 5 392 715
- US-A1- 2005 115 337
- US-A1- 2010 030 378
- US-A1- 2012 201 348
- US-A1- 2015 185 050

## Description

The present invention relates to an inspection system and a method of using said system, e.g. for inspecting a cylinder liner of an internal combustion engine.

Large internal combustion engines are used in many applications, e.g. to power large ships, or to drive generators for the production of electricity. The engine cylinder liner is an important component of such engines and since the liner, in combination with the rings of the pistons, are arranged for providing a dynamic seal between combustion chamber and crankcase during compression and power strokes, the cylinder liner surface must be free from defects.

Such defects may e.g. be caused by friction wear, corrosion, abrasion and scuffing/adhesion. For instance, friction between the piston rings and cylinder liner during operation will eventually result in liner wear. The cylinder liner wear can of course be reduced by applying appropriate lubrications (oil) to the cylinder liner, but since the friction between the piston rings and cylinder liner varies according to piston velocity between top dead center (TDC) and bottom dead center (BDC), from zero at TDC and BDC to a maximum in the middle section, the wear conditions will also vary along the piston rings travelling distance, being highest at and around the TDC. Furthermore, heat stress or damage may cause the cylinder liner to deform, which may result in the cylinder liner/bore not being cylindrical along its entire length, e.g. adopting an oval shape or a trumpet shape with a larger diameter at the top section. Practically, such liner distortion causes loss of conformity between piston rings and cylinder wall, which in turn produces some troubles to the lubrication (oil film) which is distributed in the cylinder to minimise the friction between the piston rings and the liner. Variation in the oil film thickness exposes piston rings and cylinder to the whole spectrum of lubrication regimes, from mixed and probably elastohydrodynamic to full film hydrodynamic lubrication. Consequently, different wear mechanisms will develop along the length of the cylinder liner. For instance, the TDC location will be exposed to oil starvation more than that at the BDC location. Although the piston at both locations are kinematically characterized by marginal inversion velocity situations where it reaches zero before starting to get inverted, the most severe wear is expected to appear at the TDC due to the oil shortage while at the BDC the oil is available either from the source or due to gravity. However, the BDC may also experience a high wear rate due to the existence of hard grit and wear debris accumulated by the gravity at this location and the neighbouring area. The middle location of the cylinder liner and the nearby zone, where the piston velocity reaches its maximum value, only mild wear of the cylinder liner is expected because the oil film becomes dynamically thick enough to separate the piston ring and liner, and prevent metal-to-metal contact.

Irrespectively of whether the defects on the cylinder liner are caused by friction, corrosion, abrasion, scuffing/adhesion, and/or caused by other sources, cylinder liner surface defects and deformations may have serious consequences, such as causing power loss of the engine, overheating of the liner, breakage of the piston rings, and damage to the piston and/or cylinder liner itself. These defects may not only affect the performance of the engine and increase the fuel consumption but in extreme cases, such defects may result in breakdown of the engine. Since large internal combustion engines are expensive, breakdowns are very costly, and it is therefore important to periodically check/inspect the surface of the cylinder liner for defects.

Deformation of the cylinder liner may also be caused by the tension of the cylinder cover and other, not fully known, sources. In order to map/measure this issue, it is in addition to measure the cylinder liner also relevant to inspect the cylinder liner at sections where it is not worn or damaged, preferably just above the rings position in TDC.

Conventionally inspections of cylinder liners have required physical access to the cylinder liners, requiring that large portions of the engine is dismantled, or at least that the cylinder head is removed. Inspections have therefore only been performed during major engine overhauls, or when the cylinder head is removed for other reasons e.g. when replacing the piston rings or the piston itself. Furthermore, in order for an inspection to be performed, a person (inspector) has to climbs down into the cylinder and perform a visual inspection and manually measure the cylinder liner diameter at several positions over the cylinders entire length using, for example, a large inside micrometer length gauge in order to determine the wear rate of the liner and predict when and whether the cylinder liner should be replaced. Accordingly, this inspection process is not only time consuming and expensive, since the engine is not operable during inspection, but also hazardous for the inspector performing the inspection. Furthermore the vessel is "immobilized" during the inspection for several hours, which is much longer than practically possible, since a large number of vessels e.g. tankers/bunkers/chemical vessels have to be ready to start the engine within 5-10 minutes. Accordingly, the conventional inspections can not be utilized for such vessels.

Other methods have therefore been suggested for inspecting the inner surface of a cylinder liner. In these methods, e.g. disclosed in WO2009152851 and WO2015193010, a diameter measuring device is inserted into the cylinder liner through a scavenge air port in the lower portion of the cylinder liner, and is placed on top of the piston. The diameter measuring device can then be moved in the height direction of the cylinder liner by turning the crankshaft of the engine. The piston crown is accordingly utilized as a platform supporting the diameter measuring device during the measurements. However, using the crankshaft to move the piston is not very precise, and the inspector will have poor control over the vertical movement of the measuring device. A further problem is that the turning gear easily can get overhead or damaged when the movement of the piston is stopped and started.

However, since the diameter measuring device is placed on top of the piston crown, the dimensions (extension) of the diameter measuring device has to be taken into account when the crack shaft is turned in order to prevent damage to the diameter measuring device. Furthermore, if the cylinder liner is covered with deposits etc. the known diameter measuring device will not be able to detect the actual deformations or defects of the cylinder liner, nor can they measure the shape of the cylinder head.

Another problem with the method and diameter measuring devices disclosed in WO2009152851 and WO2015193010 are that said devices only provide one measurement for a given cross-section of the cylinder liner, i.e. only at a single point is the inner surface of the cylinder liner measured. Said measurement is then converted into a diameter measurement. If further points/measurements of a given cross-section
have to be obtained, the diameter measuring device first has to be moved manually on the piston crown, making use of these known systems extremely time consuming. Furthermore, it is assumed that the cylinder liner is uniform along a given cross-section and irregularities along the circumferences of a cross-section of the cylinder liner is therefore neither measured nor taken into account when using these known methods and/or devices, and deposits on the inner surface may distort the results. This means that if a measurement is taken at a point not containing any defects, the method disclosed in WO2009152851 and WO2015193010 automatically concludes that there are no defects in other parts of the same cross-section of the cylinder liner, or if a measurement is taken where deposits are provided, but where the cylinder liner is in order, may result in false results. Furthermore, deformations in which the cylinder liners departs from the cylindrical shape, cannot be detected using the measuring methods and devices of WO2009152851 and WO2015193010.

EP 2 447 664 A1 shows a device for recording measurement information from an internal surface of a cylinder. GB 2068114 A discloses a photoelectric surface inspection apparatus for tube interiors.

Since defects in a cylinder liner of an internal combustion engine dramatically will affect the engines sealing function, lubrication scheme, and eventually its performance and service life, the creation of an improved inspection system is an increasingly critical issue, and there is presently a demand for improved methods and systems which overcomes the drawbacks of the known test systems.

It is accordingly a first aspect of the present invention to provide an inspecting system for a cylinder liner which is arranged for inspecting the entire cylinder liner, also at and above the TDC and at the BDC,
it is a second aspect of the present invention to provide an inspection system for a cylinder liner, which does not use the piston as a support/platform during operation,
it is a third aspect of the present invention to provide a simple and compact inspection system for a cylinder liner which can be inserted into the cylinder liner without dismantling/removing part of said engine,
it is a fourth aspect of the present invention to provide a inspection system for a cylinder liner which easily can be customized and/or altered in relation to the dimensions/sizes of different cylindrical liners,
it is a fifth aspect of the present invention to provide a method for inspecting a cylinder liner having low operation costs and which can be performed in a fast and effective manner, thereby reducing the downtime of the engine, and
it is a sixth aspect of the present invention to provide an inspection system for a cylinder liner, having components of a simple and relatively inexpensive character.

These and further aspects are achieved according to the present invention by providing an inspection system for a cylinder liner as defined in the appended claim 1 wherein said system comprises a self-propelled vehicle for movement along a central axis of the cylinder liner, and a measuring device arranged for being rotatable in a plane perpendicular to the central axis of the cylinder liner thereby providing measurements along the entire circumference of the cylinder liner.

Within the context of the present invention the term "self-propelled vehicle" means a vehicle capable of converting its own energy supply into motive power used for propulsion. Thus, the self-propelled vehicle does not require any additional assistance for being moved along the length/height of the cylinder liner.

Accordingly the inspection system according to the invention does not have to be placed on top of the piston crown as disclosed in e.g. WO2009152851 and WO2015193010, nor does it require any other external displacements means, e.g. robes etc. for being moved along the central axis of the cylinder liner during operation. Accordingly the inspection system can be operated independently of other components and/or parts, which is highly advantageously when an inspection of the cylinder liner is performed. First of all, the operator does not have to prevent the piston from reaching its TDC, as in WO2009152851 and WO2015193010, secondly the inspection system according to the invention can also measure the inner surface of the cylinder liner at locations which is not accessible using e.g. the piston as a platform, e.g. at positions above the TDC.

The measuring device is rotatable in a plane which is perpendicular to a central axis of the cylinder liner, e.g. via a rotational motor, and said measuring device is arranged for providing measurements in said plane and in a substantially radial direction. In this way measurements are performed along the entire circumference of the cylinder liner so that a complete overview of the cylinder liners condition is provided. In this manner it is possible to continuously detect the inner surface of the cylinder liner almost over its entire inner surface, because the measuring device inspect/scan the inner surface of the cylinder liner in a spiralling movement while the self-propelled vehicle moves upwards and/or downwards within the cylinder liner.

The measuring device may inspect/scan the inner surface of the cylinder liner via any suitable detection means, e.g. a probe/sensor and/or a camera. It is however preferred to use a proximity sensor, i.e. a sensor arranged to detect/monitor the inner surface of the cylinder liner without any physical contact.

The proximity sensor may be any kind of proximity sensor capable of measuring/scanning the inner surface of a cylinder liner, e.g. a capacitive proximity sensor or a photoelectric proximity sensor, it is however preferred to use an inductive proximity sensor, as this enables a non-contact detection of the metallic cylinder liner, i.e. oil and other deposits on the inner surface of the cylinder liner will not be measured/detected using an inductive proximity sensor, whereby the actual wear, damages or defects on the cylinder liner itself effectively will be measured/detected.

Inductive proximity sensors further has the advantage of having a high reliability and long functional life because of the absence of mechanical parts and lack of physical contact between the sensor and the sensed object.

As an alternative to a proximity sensor, the measuring device may comprise a laser scanner arranged for during operation emitting a laser beam in a directions substantially perpendicular to the central axis of the cylinder liner, and measure the time it takes for said laser beam to be reflected back from each measuring point, i.e. each point the laser beam meets on its rotational path along the circumference of the cylinder liner surface. However, such a laser scanner will also measure oil and other deposits on the inner surface of the cylinder liner, and the actual wear/defects of the cylinder liner is accordingly not reflected. Thus, the choice of detection means will depend on the desired results.

The detection means and/or measuring device is preferably arranged for generating, collecting and storing data for each measuring point the detection means meets on its rotational path along the circumference of the cylinder liner surface, and sending these to a processor, that typically is remote from the proximity sensor, where the data is processed via a suitable software arranged to generate a three dimensional (3D) scanned image of the scanned cylinder liner with measurements and/or a report with comprehensive results to facilitate decision making.

In a preferred embodiment the 3D-scanned image is compared with a 3D-image of an identical but original/pristine cylinder liner, i.e. a cylinder liner without any surface defect, in order to easily detect defects such as wear, adhesions etc. Said original cylinder liner may be a theoretical cylinder liner, i.e. based on theoretical data or be based on real scanned data from a new/not-used cylinder liner.

Differences between the original cylinder liner and the inspected cylinder liner, may be coloured in dependence of the degree of difference, e.g. such that the largest difference are marked in a first colour, no differences are marked in a second colour, and that differences in-between are grades of said colours. In this way the inspector/operator can in a fast and simple manner visually detect which part of the cylinder liner, and to what degree, said parts deviates from the original cylinder liner, and/or which parts of the inspected cylinder liner requires maintenance and/or repair.

The measuring device may also comprise a camera mounted on or near the detection means, preferably an inductive proximity sensor for gathering digital images of the surface of the cylinder liner and for presenting the digital images to an operator of the detection means. The images can be presented together with the scanned data to provide a more realistic image of the cylinder liner being scanned. By viewing the images, the operator of the scanner can also visually inspect the cylinder liner, and e.g. compare the visual information and the 3D image at the same location. This may e.g. be helpful if unexpected and/or unexplainable deviations are found for the scanned cylinder liner.

Suitable proximity sensors are well known in the art and will therefore not be discussed in further details in the present application, however proximity sensors allows for a fast, accurate and a high quality data capture, recording a large number of measurement points per second, effectively reducing the time it takes to measure a cylinder liner down to less than 10 minutes. Furthermore, the 360° field of view obtained when the measuring device is rotated, ensures that the entire inner surface of the cylinder liner can be scanned in a fast and reliable manner.

In a preferred embodiment according to the invention the inspection system is dimensioned for being inserted into the cylinder liner via an opening in the cylinder liner, e.g. via a scavenge air port. In this way the inspection system can be inserted into the cylinder liner without dismantling the cylinder cover or the exhaust valve housing, and operated without immobilizing the vessel, thereby not only significant reduce the time required for completing the inspection, but accordingly also the downtime of the engine.

As the system comprises a self-propelled vehicle the system can be inserted via any suitable opening in the cylinder liner, and the measurements can in a similar manner, start at any given location of the cylinder liner. Even though it normally is preferred that measurements of the entire cylinder liner is obtained, in some situations only the defects at or around a specific location is required/necessary, e.g. at or around the TDC, e.g. because this is the only location of interest, and/or because the already obtained results have to be verified or controlled.

Even though the self-propelled vehicle and the measuring device may be integrally formed, it is preferred that the measuring device and the self-propelled vehicle are arranged for being releasable connected to each other, e.g. via a connection means. This will not only ensure that the self-propelled vehicle and the measuring device can be inserted into the cylinder liner separately, and e.g. assembled inside the cylinder liner, but also that said components can be stored and transported individually. In this respect it is preferred that the self-propelled vehicle comprises a first connection part, that the measuring device comprises a second connection part, and that the first and second connection parts are arranged for being releasable connected to each other. Said first and second connection parts may have any suitable design, e.g. in the form of a plug/socket system, a releasable snap fit connection, etc.

In a further embodiment the first and/or second connection part may be a universal connection part, such that e.g. a measuring device can be connected to different self-propelled vehicles which each are arranged for being moved/transported inside cylinder lines of different sizes. In this way a single measuring devices can be used for many different cylinder liners, and only the self-propelled vehicle has to be altered. In order to ensure that the measuring device can rotate freely during measurements, e.g. in order to optimise speed of rotation, it is preferred that the measuring device is placed on top of the self-propelled vehicle during use and/or that the measuring device are not in direct contact with the inside surface of the cylinder liner during measurement.

It is further preferred that the inspection system according to the invention comprises an electric rotational motor arranged for rotating the measuring device while the measurements are performed, thereby ensuring that the measuring device detects/measures/scans the inner surface of the cylinder liner in a spiralling movement while the self-propelled vehicle travels upwards or downwards within the cylinder liner. In this manner it is possible to continuously detect/measure the inner surface of the cylinder liner over substantially its entire inner surface.

In a simple embodiment the inspection system comprises a separate height gauge device in order to determine the location (displacement) of the self-propelled vehicle and/or the measuring device in relation to a reference point, and accordingly the location of the measurements taken along the cylinder liner. In a preferred embodiment the inspection system is however arranged for determining it own placement in the cylinder liner, e.g. arranged for determining the coordinates (e.g., x, y, and z) for each measurement point, or it may comprise a sensor configured to indicate an altitude of the inspection system in a plane perpendicular to the central axis of the cylinder liner, as this will enhance the accuracy of the measurements. Such a sensor may e.g. be a conventional laser distance sensor (e.g. using the "Phase Shift Method") arranged for measuring the distance to a reference point, e.g. the engines exhaust valve.

In order to make the inspection process even more efficient and potentially automated, the inspection system according to the invention may further comprise one or more control systems adapted to continuously analyse the measurements provided by the measuring device and in repose to the findings obtained thereby, control and/or adjust either the speed/movement of the self-propelled vehicle and/or the rotational speed of the measuring device. As the detection means e.g. proximity sensor inspects the entire inner surface of the cylinder liner, there is no requirement or desire to measure the actual diameter/radius of the cylinder liner.

A cylinder liner is normally arranged vertically in the internal combustion engines, i.e. the central axis of the cylinder liner is vertical in relation to the ground/base on which the engine is placed. It is accordingly preferred that the self-propelled vehicle is arranged for moving in a vertical orientation, i.e. along the cylinder liners central axis, such that said vehicle moves in the height of the cylinder liner.

According to the invention the vehicle comprises a carrier that comprises at least two wheels arranged at opposite ends of the carrier, and being in rolling engagement with the cylinder liner during operation, and a driving system for rotatably driving said wheels. In this way the vehicle can move in the height direction of the cylinder liner solely due to the friction and/or adherence of its driving wheels with the inner walls of the cylinder liner.

Even though the self-propelled vehicle may function with two drive wheels, it is preferred that said vehicle comprises at least three wheels and preferably four or more wheels, not only in order to ensure that the vehicle remains in a constant physical contact with the cylinder liner, but also in order to ensure that the vehicle remains substantially stable in a plane perpendicular to the central axis of the cylinder liner, i.e. that the vehicle does not rotate about one of its own axes when it climbs up and down in the cylinder liner. The use of more than two driving wheels in contact with the inside of the cylinder liner, will assist in preventing such a rotation. Each drive wheel is preferably arranged for increasing the friction coefficient and/or the surface area contact between the respective drive wheels and the cylinder liner, thereby providing an improve surface grip and larger friction contact. This may e.g. be obtained by modifying the outer surface layer of the drive wheels, e.g. by applying a coating arranged for increasing the friction, e.g. a foam coating which will deform during use; removing part of the materials of the wheels e.g. by water jet; providing tread patterns, and/or any other relevant alterations to the wheels which will increase the surface area, and/or increase the contact friction. In this way an improved and stable inspection system according to the invention is provided, wherein movement of the vehicle along the cylinder liner is guided only by contact with the cylinder walls.

In order to further increase the surface contact of the drive wheels to the cylinder liner, the self-propelled vehicle may comprise at least one tension unit, arranged for ensuring that the drive wheels maintains in optimal contact with the surface of the cylinder liner independently of the surface conditions in the cylinder liner. Preferably the at least one tension unit is arranged for applying a predetermined force to each drive wheel and/or for absorbing the relative movements between the drive wheels and the cylinder liner. Thus, the tension unit(s) ensures that e.g. deposits or corrosions on the inner surface that will change the diameter of the cylinder liner easily can be countered such that the drive wheels of the vehicle remains in constant and in optimal contact with the inner surface of the cylinder liner. Accordingly, the use of a tension unit ensures that surface changes will not negatively influence the vehicles movements.

In this way the self-propelled vehicle is arranged for adapting to very different surface characteristics during use, e.g. wear, corrosion, abrasion and scuffing/adhesion which could have an impact on the contact area/friction between the drive wheels. In a preferred embodiment each drive wheel is connected to an individual tension unit thereby ensuring that differences provided at different areas of the cylinder liner effectively and independently can be counteracted.

In one embodiment the tension unit(s) is/are a resilient member, arranged for providing a substantially constant predetermined excessive force/tension to the drive wheels during use. Accordingly the tension unit(s) is preferably arranged both to prevent too excessive and too limited tension applied to the drive wheels, whereby an optimal operation of the inspection system according to the invention can be obtained.

A person skilled in the art will understand that the resilient means can be any suitable means having an elasticity and resilience capable of both providing a substantially constant tension to the drive wheels and allowing said wheel to adapt to any surface irregularities. Examples of such means are e.g. a spring loaded slides/bushing and/or an unit/part made of a resilient elastic materials, e.g. an elastomer. Such resilient means are well known in the art, and will not be discussed in further details in this application.

In order to ensure that the self-propelled vehicle can be used in cylinder liners with different diameters, the carrier is arranged for being adjusted in size in order to ensure that the drive wheels can enter into an optimal driving engagement with the walls of the cylinder liner. In a preferred embodiment, the carrier comprises at least two telescopic tubes, each arranged for being adjusted in their longitudinal direction such that the carriers dimensions easily can be adjusted.

The telescopic tubes are preferably made from a strong and light weight material, e.g. carbon fibres, thereby providing an optimal chassis for the self-propelled vehicle. In order to further enhance the strength of the tubes, said tubes may e.g. have a hexagonal cross-section.

In order to ensure that substantially the entire inner surface of the cylinder liner is scanned/measured while the self-propelled vehicle travels upwards or downwards within the cylinder liner, it is preferred that the self-propelled vehicle remains in a substantially horizontal position during operation, and that rotations in the three dimensions: yaw (vertical), pitch (transverse) and roll (longitudinal) substantially are prevented. If the vehicle for instance is subjected to a yaw rotation during the movement, the measurements obtained using the inspection system according to the invention, may be less accurate and/or perhaps even inaccurate.

It is accordingly preferred that the self-propelled vehicle comprise at least one alignment means arranged for preventing and/or counteracting any yaw, roll or pitch the vehicle may be subjected to during movement along the cylinder liner. Said alignment means may in a preferred embodiment comprise at least one friction unit arranged for stabilising the vehicle by contacting the cylinder liner if/when the vehicle rotates about one of it's axes, thereby preventing a further rolling action in a simple and effective manner. Said friction unit may e.g. be arranged in proximity to one or more drive wheels. For instance, if the carrier has a substantially rectangular configuration, comprising four drive wheels, two at each of the short sides of the rectangle, a friction unit may be arranged at each corner of the rectangle, such that if the vehicle rotates, one or more friction units will come into contact with the inner surface of the cylinder liner, and effectively prevent further rotation. In order to prevent contact with the inner surface of the cylinder liner and friction units during normal operation, the friction unit may comprise a curved or angled front surface, corresponding to the curvature of the cylinder liner.

The drive system according to the invention may comprise a single drive motor arranged for via suitable gear units driving all drive wheels of the vehicle. However, in a preferred embodiment each drive wheel is driven by an individual drive motor, thereby ensuring that each drive wheel can be individually controlled, e.g. via a suitable control system arranged for adjusting e.g. the speed, applied loads etc. Thus, when an undesirable rotation of the vehicle is detected, it is possible to adjust e.g. the speed of the respective drive motor thereby effectively counteracting such rotation.

Since the inspection system according to the invention comprises at least two drive wheels that preferably are individually controlled via the control system, it is possible to easily control and/or adjust the rotation of the vehicle in the three dimensions: yaw, pitch and roll. Preferably in combination with an optimal number of drive wheels (four), and the friction units.

The drive motors may be any kind of suitable drive motor arranged for being driven without contact to an external power source. In a simple embodiment the drive motors are each connected to an electric battery, which is arranged for splitting the output current equally so that each drive motor delivers the same torque. This provides a very simple and inexpensive embodiment of the drive system according to the invention.

The present invention as defined by the appended claim 11 also relates to a method of using the inspection system according to the present invention, said method comprises
- inserting the inspection system into a cylinder liner,
- activating the inspection system such that the measuring device rotates in a plane perpendicular to the central axis of the cylinder liner, while the self-propelled vehicle moves along the central axis of the cylinder liner,
- generating data for each measuring point the measuring device meets on its rotational path along the circumference of the cylinder liner surface, and
- processing said data.

In a preferred embodiment, the data is processed in order to generate a three dimensional (3D) scanned image of the scanned cylinder liner with measurements and/or a report with comprehensive results to facilitate decision making.

It is furthermore preferred that the thereby obtained 3D-scanned image can be compared with a 3D-image of an identical but pristine cylinder liner, in order to easily detect defects such as wear, adhesions etc., and differences between the pristine cylinder liner and the inspected cylinder liner.

The differences between the pristine cylinder liner and the inspected cylinder liner, may in a preferred embodiment be marked in any suitable manner, e.g. using a predefined colour scheme. This allows the inspector/operator to visually detect which part of the cylinder liner, and to what degree, said parts deviates from the original cylinder liner, and/or which parts of the inspected cylinder liner requires maintenance and/or repair.

The inspection method according to the invention can be applied to cylinder liners of all sizes, but can equally well be used for inspecting pipes lines, e.g. in factories, wells etc. which e.g. is subjected to wear, corrosion and/or foreign matter accumulation.

The invention will be described in further details below with references to the accompanying drawing in which,
Fig. 1 is a perspective view of a preferred embodiment of an inspection system according to the invention,
Fig. 2 is an exploded view of the inspection system shown in fig. 1,
Fig. 3 is a perspective view of a measuring device of the inspection system shown in fig. 1,
Fig. 4 is a perspective view of a self-propelled vehicle of the inspection system shown in fig. 1,
Fig. 5 and 6 shows how the inspection system according to the invention is inserted into a cylinder liner,
Fig. 7 and 8 show the inspection system according to the invention during inspection of a cylinder liner, and
Fig. 9 shows a 3D-image of a cylinder liner inspected using the inspection system and method according to the invention.

The invention will be described below with the assumption that the inspection system is used for inspecting a cylinder liner of an internal combustion engine. However this assumption is not to be construed as limiting, and the inspection system can just as easily be used for inspecting other large hollow cylinders, e.g. connection pipes, drainage pipes, wells, etc.

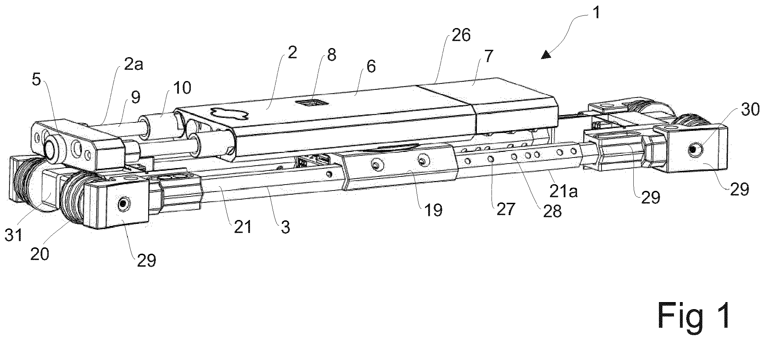

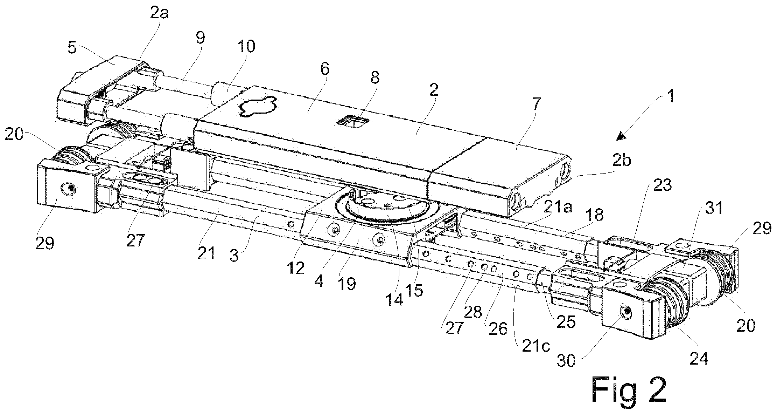

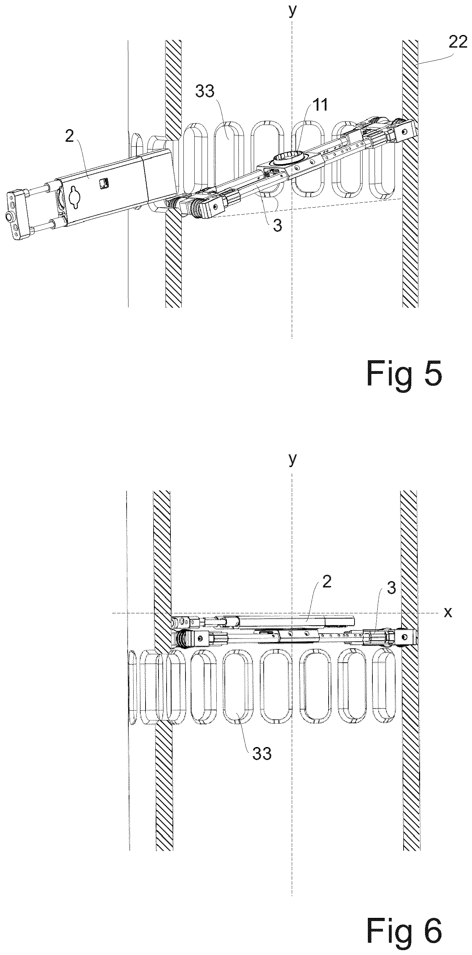

Fig. 1 shows a preferred embodiment of an inspection system 1 according to the present invention. An exploded view of said system in seen in fig. 2. The inspection system comprises a measuring device 2 and a self-propelled vehicle 3. The measuring device 2 is placed on top of the self-propelled vehicle, in a position of use, and is via a connection means 4 arranged for being rotated in a plane X which is perpendicular to a central axis Y of the cylinder liner, see among others fig. 6 for further details in this respect.

Both the measuring device 2 and self-propelled vehicle 3 have dimensions, i.e. height, width and length, that allows them to be inserted into the cylinder liner 32 through a scavenge air port 33 in the lower portion of the cylinder liner. Accordingly, they are elongated, have a mainly flat construction, and in the embodiment shown, they are also substantially rectangular.

The measuring device 2 comprises a proximity sensor 5 arranged at a first end 2a of the measuring device, and a housing 6 for accommodating the functional components (not shown) of the measuring device, e.g. a rotational motor for rotating the measuring device, a first control system, etc. A releasably rechargeable battery 7 is placed at a second end 2b of the measuring device 2, opposite the proximity sensor 5. Said battery 7 is arranged for being either recharged at a separate charging station, or be replaced with an identical battery if required. During operation the proximity sensor will optically scan and measure the cylinder liner in a directions substantially perpendicular to the central axis of the cylinder liner, i.e. each point the proximity sensor meets on its rotational path along the circumference of the cylinder liner surface is scanned/measured/detected.

The measuring device 1 comprises a laser distance sensor 8 arranged for measuring the distance to a reference point, e.g. the engines exhaust valve, and thereby provide an altitude of the inspection system 1 in the cylinder liner.

The first control system comprises all the relevant components for controlling the measuring device 2, e.g. relevant software, power electronics used to perform torque/speed control on the rotational motor, an input/output device for handling e.g. the signal of the measuring device, and a PLC for handling the signals to and from the input/output-devices. The control system may also comprises an inter-process communication system comprising software arranged for handling the human machine interface from which the operator can control and/or operate the measuring device.

In the embodiment shown, the proximity sensor 5 is telescopically mounted to the housing 6, via a number of tubular elements 9,10 that slide one into the another. In this way the dimensions of the measuring device 2 may be adjusted in dependence of the cylinder liner to be inspected, and the measuring device 2 will take up less space during storage.

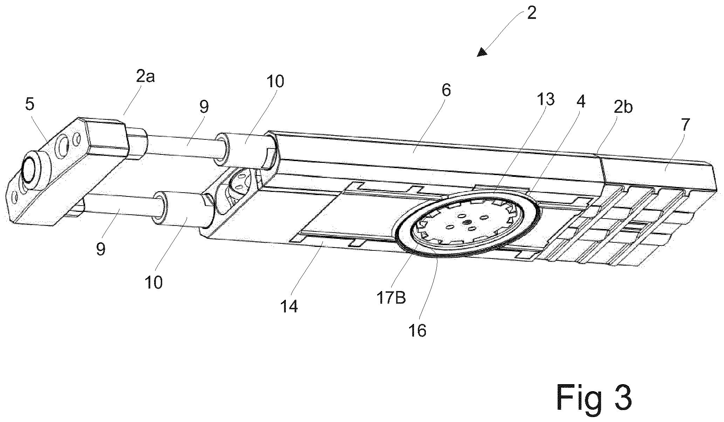

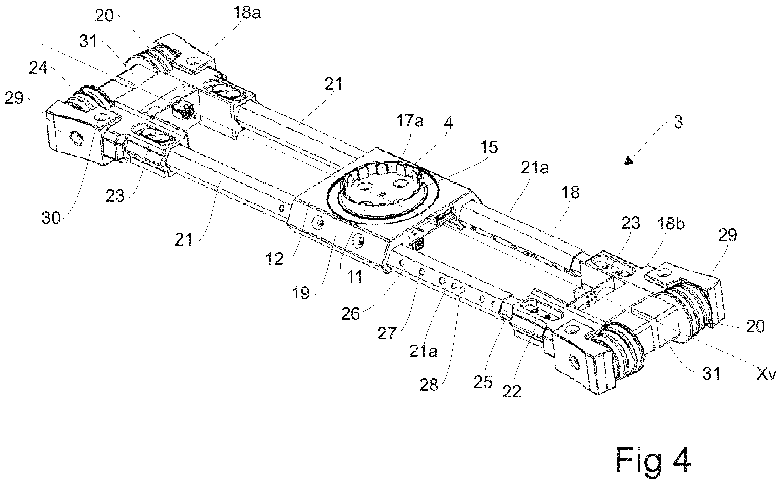

As best seen in fig. 3 and 4 the connection means 4 comprises a first connection part 11, placed on a top surface 12 of the self-propelled vehicle 3, i.e. the surface facing the measuring device 2, and a second connection part 13 placed on the bottom surface 14 of the housing 6 of the measuring device 2, i.e. the side facing the self-propelled vehicle 3. Said first and second connection parts 11,13 are arranged for being releasable connected to each other and for allowing the measuring device 2 to rotate in a plane which is perpendicular to a central axis Y of the cylinder liner. In the embodiment shown, the first connection part 11 comprises a rotating ring 15, extending form the top surface 12 of the vehicle 3, and being arranged for engaging a corresponding circular groove 16 placed at the bottom surface 14 of the housing 6. Furthermore, the first connection part 11 comprises a number of first fixing segments 17a, which can engage corresponding second fixing segments 17b on the second connection part 13. This unique construction effectively ensures that the measuring device 2 can rotate in a plane X perpendicular to the central axis Y of the cylinder liner, while the self-propelled vehicle 3 maintains its substantially horizontal orientation in the cylinder liner 32.

The self-propelled vehicle 3 is shown in details in fig. 4. Said vehicle comprises a carrier 18 having a connection hub 19 and four driving wheels 20, two arranged at each end 18a,18b of the carrier. Each driving wheel 20 is connected to the connection hub 19 via a connection tube 21, and a tension unit 22 consisting of a spring loaded bushing 23. Said tension unit 22 is arranged for applying a predetermined force to the respective drive wheel 20, and for absorbing small variations in the inner surface of the cylinder liner, thereby ensuring that the drive wheels 20 remains in optimal engagement with the inner surface of the cylinder liner.

Each drive wheel 20 is substantially frustum-shaped, tapering away from the elongated axis Xᵥ of the vehicle, in order to provide a shape that follows the curvature of the cylinder liner, and accordingly an enhanced surface contact with the inner surface.

Each drive wheel comprises a foam coating 24 which deforms when the wheels are in contact with the inner surface of the cylinder liner. Such a foam coating 24 will provide a large contact areas to secure a high friction coefficient, and therefore obtains beneficial properties corresponding to e.g. "tank tracks".

In order to ensure that the self-propelled vehicle 3 can be used in cylinder liners having different dimensions, two of the connection tubes 21a are arranged as telescopic tubes, i.e. the tube comprises an outer and inner tube-element 25,26 which can extend one inside the other. Said telescopic tubes 21a comprises a fixation means 27 that ensures that the telescopic tubes 21a maintains the desired length. In the embodiment shown the outer tube 26 comprises a longitudinal row of holes 28 and the inner tube 25 a radially extending spring-biased detent (not shown) to selectively engage one of the holes in dependence of the desired length. However other relevant fixation means, e.g. bolt and nut, are also contemplated within the scope of the present invention.

The self-propelled vehicle 3 further comprises four friction units 29 arranged for preventing and/or counteracting any yaw, roll or pitch the vehicle 3 may experience during movement along the central axis Y of the cylinder liner 32. Said friction units 29 are arranged on the outer side of each of the drive wheels 20, i.e. the side facing the cylinder liner during use, and is arranged such that if the vehicle 3 rotates about one of it's own axes, the friction unit(s) 29 will be the first component that encounters the cylinder liner. In this way the self-propelled vehicle 3 will be prevented from rotating any further. The friction units 29 are substantially rigidly connected to the tension unit 23 and/or the connecting tube 21 via a suitable fastening means 30, e.g. a bolt/nut etc.

Each drive wheel 20 is connected to an individual drive motor 31, via a suitable gear unit (not shown) thereby ensuring that each drive wheel 20 can be individually controlled, e.g. via a suitable second control system, placed in the connection hub 19, and being arranged for adjusting e.g. the speed, applied loads etc. of the drive wheels.

The second control system is arranged for controlling the self-propelled vehicle 3, and accordingly comprises relevant software, power electronics used to perform torque control on the drive motors 31 etc. The second control system may further comprise a safety system arranged for monitoring predefined critical limits/signals from the vehicle 3, e.g. if any yaw, roll or pitch is detected, and in response to any such critical signals, alter the torque and/or speed of one or more of the drive motors 31 in order to counter the yaw, roll and/or pitch. This action will of course be assisted by the friction units 29, which effectively both will prevent the vehicle 3 from rotatating and ensure a correct alignment of the vehicle, i.e. in which a longitudinal centre plane through the vehicle will be parallel with a plane perpendicular to the central axis of the cylinder liner.

The first and/or second control system also comprises an inter-process communication system comprising software arranged for handling the human machine interface from which the operator can control and/or operate the inspection system 1.

Even though the inspection system 1, in the embodiment shown in the figures, comprises a first and a second control system, the inspection system may comprise a combined control system arranged for performing the function of both the first and the second control system.

Fig. 5 shows how the inspection system is inserted into a cylinder liner 32, via a scavenge air port 33 in the lower part of the cylinder liner. In fig. 5 the self-propelled vehicle 3 which already has been inserted though the air port 33, is loosely fixed at an angle α in the cylinder liner 32. The measuring device 2 is then inserted into the cylinder liner 32, via the same air port 33, and the measuring device 2 and vehicle 3 can then be releasably connected to each other via the first and connection means 11,13. Thereafter the inspection system 1 are manually placed in a plane X perpendicular to the central axis Y of the cylinder liner, as shown in fig. 6.

In this way the inspection system 1 is inserted into the cylinder liner 32 without dismantling the cylinder cover or the exhaust valve housing, thereby significantly reducing the downtime of the engine and also preventing that the vessel is immobilised. When the operator is satisfied the inspection system 1 has been inserted correctly in the cylinder liner 32, the operator can via the human machine interface, e.g. a PC or mobile phone, activate, control and/or operate the inspection system 1. When the system is activated the measuring device 2 will start to rotate and scan the entire inner surface in a spiralling movement while the self-propelled vehicle 3 moves upwards within the cylinder liner.

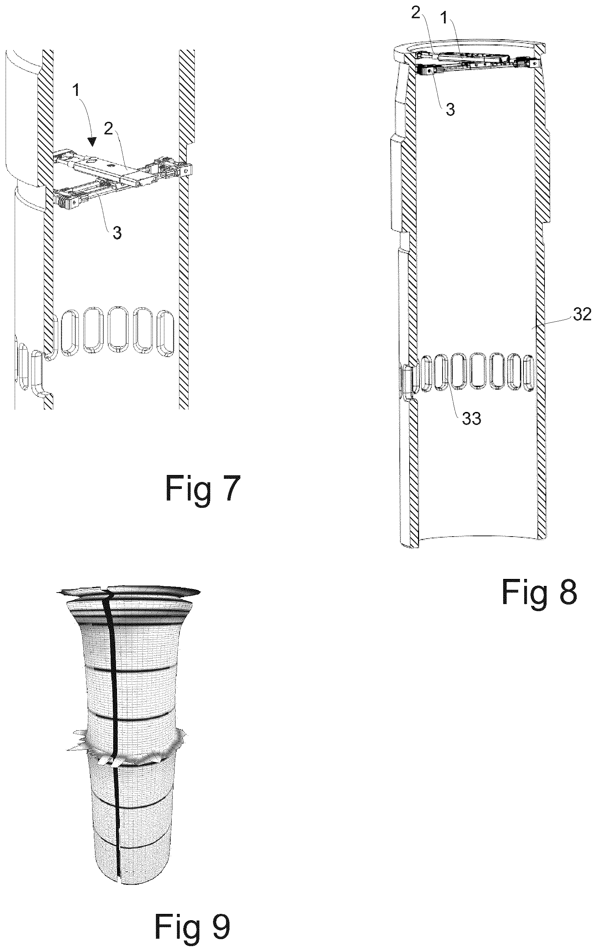

Fig. 7 shows the inspection system 1 in an intermittent position in the cylinder liner 32 during said inspection, and in fig. 8 the inspection system has reached the TDC. The inspection system 1 may either be programmed to move along a certain length of the cylinder liner, or e.g. that when the laser sensor 8 detects a distance to the reference point which is below a predefined threshold, the control system will automatically prevent the inspection system 1 from proceeding further, and preferably reverse the direction of the vehicle, such that the inspection system is returned to the starting position, shown in fig. 6, where the operator can remove the inspection system from the cylinder liner.

A person skilled in the art will understand that the inspection system 1 is substantially autonomous, and that once the inspection system is inserted, the system will measure/scan the entire inner surface of the cylinder liner, and then return to the starting position, without interference from the operator, and that e.g. yaws, pitches and rolls automatically are prevented during operation by means of the friction units 29 and the control of the drive wheels 20 via the second control system.

The obtained data from the scanning/inspection of the cylinder liner, is collected, stored and processed e.g. by the first control system, via suitable software arranged to generate a three dimensional (3D) scanned image of the scanned cylinder liner with measurements and/or a report with comprehensive results to facilitate decision making. The data may e.g. be accessed/displayed through the human machine interface, e.g. Smartphone, Laptop etc.

Such a 3D-scanned image is shown in fig. 9, and may if desired be compared with a 3D-image of an identical but pristine cylinder liner, in order to easily detect defects such as wear, adhesions etc. Differences between the pristine cylinder liner and the inspected cylinder liner, may be marked in any suitable manner, e.g. using a predefined colour scheme. In this way the inspector/operator can in a fast and simple manner visually detect which part of the cylinder liner, and to what degree, said parts deviates from the original cylinder liner, and/or which parts of the inspected cylinder liner requires maintenance and/or repair.

Test have shown that the inspection system according to the invention can scan/inspect a cylinder liner of a large internal combustion engine of a transport ship, in less than 10 minutes, without immobilising the vessel and/or dismantling the engine. The inspection system according to the invention therefore provides a method for inspecting a cylinder liner in a faster, and more precise manner than hitherto known.

Modifications and combinations of the above principles and designs are foreseen within the scope of the present invention defined by the appended claims.

## Claims

1. An inspection system (1) for a cylinder liner, said system comprises a self-propelled vehicle (3) arranged for movement along a vertical central axis (Y) of the cylinder liner, and a measuring device (2) arranged for being rotatable in a plane perpendicular (X) to the central axis of the cylinder liner thereby providing measurements along the entire surface of the cylinder liner and wherein the self-propelled vehicle (3) comprises a carrier (18), and wherein said carrier comprises at least two drive wheels (20) arranged at opposite ends (18a,18b) of the carrier (18), and being arranged to be in rolling engagement with the cylinder liner (32) during operation, and driving means (31) for rotatably driving said drive wheels (20), and wherein the carrier is arranged for being adjusted in size in order to ensure that the drive wheels can enter into an optimal driving engagement with the walls of the cylinder liner.

2. The inspection system (1) according to claim 1, wherein the measuring device (2) comprises a proximity sensor (5), preferably an inductive proximity sensor.

3. The inspection system (1) according to claim 1 or 2, wherein the self-propelled vehicle (3) and the measuring device (2) each are dimensioned for being inserted into the cylinder liner via an opening in the cylinder liner, e.g. via a scavenger air port.

4. The inspection system (1) according to claim 1, 2 or 3, wherein the self-propelled vehicle (3) and the measuring device (2) is arranged for being releasable connected to each other.

5. The inspection system (1) according to any of the preceding claims, wherein the measuring device (2) is arranged to be not in direct contact with the inside surface of the cylinder liner during measurement.

6. The inspection system (1) according to any of the preceding claims, wherein each drive wheel (20) is arranged for increasing the friction coefficient and/or the surface area contact between the respective drive wheel and the cylinder liner during use.

7. The inspection system (1) according to any of the preceding claims, wherein each drive wheel (20) comprises a foam coating (24) which will deform when said drive wheel (20) are in contact with the cylinder liner (32), thereby increasing the friction coefficient and/or the surface area contact between the respective drive wheel (20) and the cylinder liner.

8. The inspection system (1) according to any of the preceding claims, wherein the self-propelled vehicle (3) comprises at least one tension unit (23) arranged for applying a predetermined force to each drive wheel (20) and/or for absorbing the relative movements between the drive wheels (20) and the cylinder liner (32) during operation.

9. The inspection system (1) according to any of the preceding claims, wherein the self-propelled vehicle (3) comprise at least one alignment means (29) arranged for preventing and/or counteracting any yaw, roll or pitch the vehicle (3) may be subjected to during movement along the central axis (Y) of the cylinder liner (32).

10. The inspection system (1) according to claim 9, wherein said alignment means (29) comprise at least one friction unit (29) arranged for stabilising the vehicle (3) by contacting the cylinder liner if/when the vehicle (3) rotates about one of it's axes during operation.

11. A method of inspecting a cylinder liner (32) using the inspection system (1) according to any of the claims 1 - 10, wherein said method comprises the following consecutive steps:
- inserting the inspection system (1) into a cylinder liner (32),
- activating the inspection system (32) such that the measuring device (2) rotates in a plane (X) perpendicular to the vertical central axis (Y) of the cylinder liner, while the self-propelled vehicle (3) moves along the vertical central axis (Y) of the cylinder liner,
- generating data for each measuring point the measuring device (2) meets on its rotational path along the circumference of the cylinder liner surface, and
- processing said data.

12. The method according to claim 11, wherein the generated data is processed in order to provide a three dimensional (3D) image of the inspected cylinder liner.

13. The method according to claim 11 or 12, wherein the provided 3D-image is compared with a 3D-image of an identical but pristine cylinder liner.

## Patentansprüche

1. Inspektionssystem (1) für ein Zylinderrohr, wobei das System ein selbstfahrendes Fahrzeug (3), das zur Bewegung entlang einer vertikalen Mittelachse (Y) des Zylinderrohrs angeordnet ist, und ein Messgerät (2) umfasst, das ausgestaltet ist, in einer senkrecht (X) zur Mittelachse des Zylinderrohrs verlaufenden Ebene drehbar zu sein, wodurch es Messungen entlang der gesamten Fläche des Zylinderrohrs vorsieht, und wobei das selbstfahrende Fahrzeug (3) einen Träger (18) umfasst, und wobei der Träger zumindest zwei Antriebsräder (20), die an gegenüberliegenden Enden (18a, 18b) des Trägers (18) angeordnet sind und die angeordnet sind, um während des Betriebs mit dem Zylinderrohr (32) in rollenden Eingriff zu stehen, und Antriebsmittel (31) zum drehbaren Antreiben der Antriebsräder (20) umfasst, und wobei der Träger zur Anpassung in der Größe angeordnet ist, um zu gewährleisten, dass die Antriebräder in einen optimalen Antriebseingriff mit den Wänden des Zylinderrohrs eintreten können.

2. Inspektionssystem (1) nach Anspruch 1, wobei das Messgerät (2) einen Näherungssensor (5), vorzugsweise einen induktiven Näherungssensor, umfasst.

3. Inspektionssystem (1) nach Anspruch 1 oder 2, wobei das selbstfahrende Fahrzeug (3) und das Messgerät (2) jeweils so dimensioniert sind, um über eine Öffnung, beispielsweise einen Spülluftdurchlass, des Zylinderrohrs in das Zylinderrohreingeführt eingeführt zu werden.

4. Inspektionssystem (1) nach Anspruch 1, 2 oder 3, wobei das selbstfahrende Fahrzeug (3) und das Messgerät (2) dazu ausgestaltet sind, lösbar miteinander verbunden zu sein.

5. Inspektionssystem (1) nach einem der vorhergehenden Ansprüche, wobei das Messgerät (2) dazu ausgestaltet ist, während der Messung nicht in direktem Kontakt mit der Innenfläche des Zylinderrohrs zu stehen.

6. Inspektionssystem (1) nach einem der vorhergehenden Ansprüche, wobei jedes Antriebsrad (20) zum Erhöhen des Reibungskoeffizienten und/oder des Oberflächenbereichskontakts zwischen dem jeweiligen Antriebsrad und dem Zylinderrohr während des Gebrauchs ausgestaltet ist.

7. Inspektionssystem (1) nach einem der vorhergehenden Ansprüche, wobei jedes Antriebsrad (20) eine Schaumbeschichtung (24) umfasst, die sich verformt, wenn das Antriebsrad (20) mit dem Zylinderrohr (32) in Kontakt steht, wodurch der Reibungskoeffizient und/oder der Oberflächenbereichskontakt zwischen dem jeweiligen Antriebsrad (20) und des Zylinderrohrs erhöht wird.

8. Inspektionssystem (1) nach einem der vorhergehenden Ansprüche, wobei das selbstfahrende Fahrzeug (3) zumindest eine Spanneinheit (23) umfasst, die zum Ausüben einer vorbestimmten Kraft auf jedes Antriebsrad (20) und/oder zum Absorbieren der relativen Bewegungen zwischen den Antriebsrädern (20) und des Zylinderrohrs (32) während des Betriebs angeordnet ist.

9. Inspektionssystem (1) nach einem der vorhergehenden Ansprüche, wobei das selbstfahrende Fahrzeug (3) zumindest ein Ausrichtungsmittel (29) umfasst, das zum Verhindern von und/oder Entgegenwirken gegen jegliches Gieren, Rollen oder Nicken, dem das Fahrzeug (3) während der Bewegung entlang der Mittelachse (Y) des Zylinderrohrs (32) ausgesetzt sein kann, ausgestaltet ist.

10. Inspektionssystem (1) nach Anspruch 9, wobei das Ausrichtungsmittel (29) zumindest eine Reibungseinheit (29) umfasst, die zum Stabilisieren des Fahrzeugs (3) durch Kontaktieren des Zylinderrohrs angeordnet ist, falls/wenn das Fahrzeug (3) während des Betriebs um eine seiner Achsen dreht.

11. Verfahren zum Inspizieren eines Zylinderrohr (32) unter Benutzung des Inspektionssystems (1) nach einem der Ansprüche 1 bis 10, wobei das Verfahren die folgenden konsekutiven Schritte umfasst:
- Einführen des Inspektionssystems (1) in ein Zylinderrohr (32),
- Aktivieren des Inspektionssystems (1), sodass das Messgerät (2) in einer senkrecht zur vertikalen Mittelachse (Y) des Zylinderrohrs stehenden Ebene (X) dreht, während sich das selbstfahrende Fahrzeug (3) entlang der vertikalen Mittelachse (Y) des Zylinderrohrs bewegt,
- Erstellen von Daten für jeden Messpunkt, den das Messgerät (2) auf seinem Drehpfad entlang des Umfangs des Zylinderrohrfläche antrifft, und
- Verarbeiten der Daten.

12. Verfahren nach Anspruch 11, wobei die erstellten Daten verarbeitet werden, um ein dreidimensionales (3D-) Bild das inspizierte Zylinderrohr vorzusehen.

13. Verfahren nach Anspruch 11 oder 12, wobei das vorgesehene 3D-Bild mit einem 3D-Bild eines identischen, jedoch makellosen Zylinderrohrs verglichen wird.

## Revendications

1. Système de contrôle (1) pour une chemise de cylindre, ledit système comprend un véhicule autopropulsé (3) agencé pour se déplacer le long d'un axe central vertical (Y) de la chemise de cylindre, et un dispositif de mesure (2) agencé pour pouvoir pivoter dans un plan perpendiculaire (X) à l'axe central de la chemise de cylindre, fournissant ainsi des mesures sur toute la surface de la chemise de cylindre et dans lequel le véhicule autopropulsé (3) comprend un support (18), et dans lequel ledit support comprend au moins deux roues d'entraînement (20) disposées aux extrémités opposées (18a, 18b) du support (18), et étant en engagement de roulement avec la chemise de cylindre (32) pendant le fonctionnement, et des moyens d'entraînement (31) pour entraîner en rotation lesdites roues d'entraînement (20), et dans lequel le support est agencé pour être ajusté en taille afin d'assurer que les roues d'entraînement peuvent entrer en prise d'engagement optimale avec les parois de la chemise de cylindre.

2. Système de contrôle (1) selon la revendication 1, dans lequel le dispositif de mesure (2) comprend un capteur de proximité (5), de préférence un capteur de proximité inductif.

3. Système de contrôle (1) selon la revendication 1 ou 2, dans lequel le véhicule autopropulsé (3) et le dispositif de mesure (2) sont chacun dimensionnés pour être insérés dans la chemise de cylindre par une ouverture dans la chemise de cylindre, par exemple par un orifice d'air de balayage.

4. Système de contrôle (1) selon la revendication 1, 2 ou 3, dans lequel le véhicule autopropulsé (3) et le dispositif de mesure (2) sont agencés pour être reliés l'un à l'autre de manière amovible.

5. Système de contrôle (1) selon l'une des revendications précédentes, dans lequel le dispositif de mesure (2) est agencé pour ne pas être en contact direct avec la surface intérieure de la chemise de cylindre pendant la mesure.

6. Système de contrôle (1) selon l'une des revendications précédentes, dans lequel chaque roue d'entraînement (20) est agencée de manière à augmenter le coefficient de frottement et/ou la surface de contact entre la roue d'entraînement respective et la chemise de cylindre pendant l'utilisation.

7. Système de contrôle (1) selon l'une quelconque des revendications précédentes, dans lequel chaque roue d'entraînement (20) comprend un revêtement en mousse (24) qui se déforme lorsque lesdites roues d'entraînement (20) sont en contact avec la chemise de cylindre (32), augmentant ainsi le coefficient de frottement et/ou la surface de contact entre la roue d'entraînement (20) respective et la chemise de cylindre.

8. Système de contrôle (1) selon l'une quelconque des revendications précédentes, dans lequel le véhicule autopropulsé (3) comprend au moins une unité de tension (23) agencée pour appliquer une force prédéterminée à chaque roue d'entraînement (20) et/ou pour absorber les mouvements relatifs entre les roues d'entraînement (20) et la chemise de cylindre (32) pendant le fonctionnement.

9. Système de contrôle (1) selon l'une quelconque des revendications précédentes, dans lequel le véhicule autopropulsé (3) comprend au moins un moyen d'alignement (29) agencé pour empêcher et/ou contrecarrer tout lacet, roulis ou tangage auquel le véhicule (3) peut être soumis pendant le mouvement le long de l'axe central (Y) de la chemise de cylindre (32).

10. Système de contrôle (1) selon la revendication 9, dans lequel lesdits moyens d'alignement (29) comprennent au moins une unité de friction (29) agencée pour stabiliser le véhicule (3) en entrant en contact avec la chemise de cylindre si/quand le véhicule (3) pivote autour d'un de ses axes pendant le fonctionnement.

11. Procédé de contrôle d'une chemise de cylindre (32) utilisant le système de contrôle (1) selon l'une quelconque des revendications 1 à 10, dans lequel ledit procédé comprend les étapes consécutives suivantes consistant à :
- insérer le système de contrôle (1) dans une chemise de cylindre (32),
- activer système de contrôle (1) de telle sorte que l'appareil de mesure (2) pivote dans un plan (X) perpendiculaire à l'axe central vertical (Y) de la chemise de cylindre, tandis que le véhicule autopropulsé (3) se déplace le long de l'axe central vertical (Y) de la chemise de cylindre,
- générer des données pour chaque point de mesure que le dispositif de mesure (2) rencontre sur sa trajectoire de rotation le long de la circonférence de la surface de la chemise de cylindre, et
- traiter lesdites données.

12. Procédé selon la revendication 11, dans lequel les données générées sont traitées afin de fournir une image tridimensionnelle (3D) de la chemise de cylindre contrôlée.

13. Procédé selon la revendication 11 ou 12, dans laquelle l'image 3D fournie est comparée à une image 3D d'une chemise de cylindre identique mais intacte.
